# EUROPÄISCHE PATENTSCHRIFT

(11) **EP 0 730 511 B1**
(45) Veröffentlichungstag und Bekanntmachung des Hinweises auf die Patenterteilung: **08.03.2000**
(21) Anmeldenummer: 94927536.6
(22) Anmeldetag: 02.09.1994
(51) Int. Cl.: B23Q 16/02

(54) **WERKZEUGREVOLVER-EINRICHTUNG FÜR WERKZEUGMASCHINEN**
TOOL TURRET DEVICE FOR MACHINE TOOLS
SYSTEME DE REVOLVER PORTE-OUTILS POUR MACHINES-OUTILS

(30) Priorität: 27.11.1993 DE 4340512
(43) Veröffentlichungstag der Anmeldung: 11.09.1996
(73) Patentinhaber: INDEX-WERKE GMBH & CO. KG HAHN & TESSKY, 73730 Esslingen (DE)
(72) Erfinder: LINK, Helmut, Friedrich, D-73773 Aichwald (DE)
(74) Vertreter: Hoeger, Stellrecht & Partner
(86) Internationale Anmeldenummer: EP9402912
(87) Internationale Veröffentlichungsnummer: WO9514551

(56) Entgegenhaltungen:
- EP-A- 0 202 528
- FR-A- 2 578 460
- GB-A- 2 105 225
- US-A- 2 021 030
- US-A- 3 827 312

## Beschreibung

Die Erfindung betrifft eine Werkzeugrevolver-Einrichtung für Werkzeugmaschinen, insbesondere für Drehmaschinen, mit einer Revolverkopf-Tragvorrichtung, an der ein mehrere Werkzeugstationen aufweisender Revolverkopf um eine Schaltachse drehbar angebracht ist, einer Revolverkopf-Schaltvorrichtung zum Drehen des Revolverkopfs aus einer Schaltstellung, in der sich eine seiner Werkzeugstationen in einer Arbeitsposition befindet, in eine andere Schaltstellung, in der sich eine andere Werkzeugstation in Arbeitsposition befindet, sowie mit Verriegelungsmitteln zum Halten des Revolverkopfs in seinen Schaltstellungen und zur Drehfreigabe des Revolverkopfs während des Weiterschaltens, wobei die Revolverkopf-Schaltvorrichtung eine zusammen mit dem Revolverkopf um die Schaltachse drehbare und mit dem Revolverkopf drehfest verbundene Malteserkreuz-ähnliche Schaltscheibe mit jeweils einem am Schaltscheibenumfang (gegebenenfalls am Umfang eines wirksamen Bereichs der Schaltscheibe) offenen und mit zwei Längsflanken versehenen Schlitz pro Werkzeugstation des Revolverkopfs und einen Treiber aufweist, der um eine zur Schaltachse parallele Antriebsachse drehantreibbar ist und exzentrisch zu letzterer mindestens zwei Treiberfinger zum Einfahren in einen Schaltscheibenschlitz, zum Weiterschalten der Schaltscheibe und zum Herausfahren aus dem Schaltscheibenschlitz trägt, die mit gleichen radialen Abständen von der Treiber-Antriebsachse und in einem Drehwinkelabstand voneinander angeordnet sind.

Der Sinn eines Werkzeugrevolvers ist es, in einer Werkzeugmaschine nacheinander eine Vielzahl von Werkzeugen, die in den Werkzeugstationen des Revolverkopfs gehalten werden, schnell und präzise in eine Arbeitsposition zu bringen. Da im allgemeinen während des Weiterschaltens des Revolverkopfs (um ein anderes Werkzeug in Arbeitsposition zu bringen) Werkstücke nicht bearbeitet werden können, sich derartige unproduktive Nebenzeiten bezüglich der herzustellenden Werkstücke jedoch kostenerhöhend auswirken, wird von den Herstellern von Werkzeugmaschinen gefordert, diese Nebenzeiten immer mehr zu verkürzen.

Bei den meisten bekannten Werkzeugrevolver-Einrichtungen hat man zwischen zwei hinsichtlich ihrer Durchführung voneinander unabhängigen Funktionen zu unterscheiden: Zum einen das Ver- bzw. Entriegeln des Revolverkopfs in definierten Schaltstellungen, in denen sich normalerweise jeweils ein Werkzeug des Revolverkopfs in der Arbeitsposition befindet, wobei das Verriegeln des Revolverkopfs dem Zweck dient, ein ungewolltes Verdrehen des Revolverkopfs zu verhindern, und zum anderen das Drehen oder Weiterschalten des Revolverkopfs in die nächste oder eine der anderen Schaltstellungen, um ein anderes Werkzeug in die Arbeitsposition zu bringen.

Zum Ver- bzw. Entriegeln des Revolverkopfs wurden in entsprechende Bohrungen einschiebbare Indexierbolzen und dergleichen verwendet; diese haben aber den Nachteil, daß sie wegen des erforderlichen Bewegungsspiels den Revolverkopf nicht spielfrei verriegeln können; außerdem erfordern sie aufwendige mechanische Betätigungsmechanismen, die einem erheblichen Verschleiß unterworfen sind und normalerweise nur eine Drehrichtung des Revolverkopfs zulassen. Andere bekannte Verriegelungsvorrichtungen arbeiten mit sogenannten HIRTH-Verzahnungen (planverzahnte Ringe, die im verriegelten Zustand mit ihren Verzahnungen ineinandergreifen); HIRTH-Verzahnungen mit zwei Zahnringen, von denen der eine stationär und der andere mit dem Revolverkopf verbunden ist, erfordern eine axiale Verschiebung des Revolverkopfs zum Ver- bzw. Entriegeln, was sie wegen der erheblichen Masse eines mit Werkzeugen bestückten Revolverkopfs für schnelle Revolverschaltungen ungeeignet macht. Dreiteilige HIRTH-Verzahnungen mit drei Zahnringen, von denen einer in Richtung der Revolverkopf-Schaltachse verschiebbar ist, um ihn zum Eingriff mit einem am Revolverkopf vorgesehenen Zahnring und gleichzeitig mit einem stationären Zahnring bringen zu können, sind in ihrer Herstellung und Montage teuer, da von der Exaktheit des Zahneingriffs die Präzision der Verriegelung des Revolverkopfs in dessen Schaltstellungen abhängt. Außerdem machen beide Typen von HIRTH-Verzahnungen Betätigungsvorrichtungen für eine axiale Verschiebung des Revolverkopfs bzw. eines der drei Zahnringe erforderlich.

Zum Drehen, d. h. zum Weiterschalten des Revolverkopfs werden in bekannten Werkzeugrevolver-Einrichtungen elektrische oder hydraulische Positionierantriebe verwendet, die, wenn ein schnelles Weiterschalten und eine genaue Positionierung des Revolverkopfs gefordert werden, hochdynamisch sein müssen und deshalb teuer sind; des weiteren ist es bekannt, den Revolverkopf mittels eines Malteserkreuz-Getriebes zu drehen, d. h. weiterzuschalten. In beiden Fällen kommt bei den bekannten Werkzeugrevolver-Einrichtungen jedoch eine der vorstehend erläuterten Vorrichtungen zum Ver- bzw. Entriegeln des Revolverkopfs hinzu, da die bekannten erwähnten Drehantriebe nicht in der Lage sind, den Revolverkopf präzise in seinen Schaltstellungen festzuhalten - in diesem Zusammenhang dürfen die hohen Kräfte und Momente nicht außer Betracht gelassen werden, die beim Arbeiten mit einem vom Revolverkopf getragenen Werkzeug am Revolverkopf auftreten können.

Die GB-A-2 105 225 beschreibt eine Werkzeugrevolver-Einrichtung mit einer Malteserkreuz-ähnlichen Schaltscheibe, welche mit einem um eine Schaltachse drehbaren und schaltbaren Revolverkopf drehtest verbunden ist und zwischen identisch ausgebildeten und drehwinkelmäßig äquidistant angeordneten, sich in Richtung der Schaltachse erstreckenden Nocken jeweils eine Nut aufweist. Dem Antrieb der Schaltscheibe dient ein um eine zur Revolverschaltachse parallele Achse drehbarer Treiber mit zwei kreiszylindrischen Treiberfingern, welche einander mit einem Drehwinkelabstand von 180° gegenüberliegen und zum Weiterschalten des Revolverkopfs durch Drehen des Treibers in die Nuten einführbar sind. Der Verriegelung des Revolverkopfs in seinen verschiedenen Schaltstellungen dient eine vorstehend bereits beschriebene dreiteilige HIRTH-Verzahnung.

Die GB-A-2 105 225, die eine Werkzeugrevolver-Einrichtung nach dem oberbegriff des Anspruchs 1 beschreibt, offenbart also eine Werkzeugrevolver-Einrichtung der eingangs definierten Art.

Schließlich ergibt sich aus der EP-A-0 202 528 eine Malteserkreuz-ähnliche Schaltvorrichtung zum schrittweisen Weiterschalten und Verriegeln eines Rundschalttisches. Diese bekannte Malteserkreuz-ähnliche Schaltvorrichtung hat eine Schaltscheibe mit radialen Schlitzen, deren jeder zwei zueinander parallele, sich in radialer Richtung erstreckende Längsflanken aufweist, welche nahe der Peripherie der Schaltscheibe in divergierende kreisbogenförmige Kurven übergehen. Zum Weiterschalten sowie zum Blockieren der Schaltscheibe ist ein Treiber vorgesehen, der um eine zur Schaltscheibenachse parallele Achse drehbar ist und zwei um einen Drehwinkel von 180° gegeneinander versetzte und als frei drehbare Rollen gestaltete Treiberfinger kreiszylindrischer Form aufweist, die zum Verriegeln der Schaltscheibe in deren Ruhestellungen und zugeordneten Ruhestellungen des Treibers spielfrei gegen zwei einander benachbarte Kurven zweier einander benachbarter Schaltscheibenschlitze anliegen. Zum Weiterschalten der Schaltscheibe wird durch Drehen des Treibers eine der kreiszylindrischen Treiberfingerrollen in einen der Schaltscheibenschlitze eingefahren und der Treiber so lange weitergedreht, bis diese Treiberfingerrolle den durch parallele Längsflanken begrenzten Bereich des Schaltscheibenschlitzes wieder verlassen hat und die beiden Treiberfingerrollen wieder spielfrei gegen zwei der besagten Kurven anliegen. Um bei dieser bekannten Konstruktion die Schaltscheibe in ihren Ruhepositionen spielfrei blockieren zu können, müßten sich die kreiszylindrischen Treiberfingerrollen in den durch zueinander parallele Längsflanken begrenzten Bereichen der Schaltscheibenschlitze spielfrei bewegen, da diese zueinander parallelen Längsflanken stufenlos in die kreisbogenförmigen Kurven übergehen, an denen die Treiberfingerrollen spielfrei anliegen müssen, wenn sie die Schaltscheibe in ihren Ruhepositionen spielfrei blockieren sollen. Wenn eine der Treiberfingerrollen sich aber in dem durch zueinander parallele Längsflanken begrenzten Bereich eines Schaltscheibenschlitzes spielfrei bewegen soll, kann sich diese Treiberfingerrolle gar nicht oder zumindest nur undefiniert und unter Überwindung eines großen Widerstandes drehen, da ein Abrollen der Treiberfingerrolle auf einer der Längsflanken eine andere Drehrichtung der Treiberfingerrolle als das Abrollen auf der anderen Längsflanke bedingt. Hieraus folgt, daß die sich aus der EP-A-0 202 528 ergebende Schaltvorrichtung entweder die Schaltscheibe in ihren Ruhepositionen nicht spielfrei verriegeln oder kinematisch nicht richtig funktionieren kann.

Der Erfindung liegt die Aufgabe zugrunde, eine Werkzeugrevolver-Einrichtung zu schaffen, die sich kostengünstig herstellen läßt und eine einwandfreie Funktion aufweist, gleichzeitig aber kurze Nebenzeiten ermöglicht, d. h. kurze Zeiten für das Entriegeln, Weiterschalten und Verriegeln des Revolverkopfs.

Ausgehend von einer Werkzeugrevolver-Einrichtung der eingangs definierten Art läßt sich diese Aufgabe erfindungsgemäß dadurch lösen, daß die Treiberfinger von am Treiber um zur Treiberantriebsachse parallele Achsen frei drehbar gelagerten Rollen gebildet werden und jeder Treiberfinger ein Verriegelungsrollensegment mit einem ersten Außendurchmesser sowie ein Schaltrollensegment mit einem zweiten, kleineren Außendurchmesser besitzt, welchletzterer kleiner als der Querabstand der beiden Längsflanken der Schaltscheibenschlitze voneinander ist, und daß jeder Längsflanke eines jeden der Schaltscheibenschlitze eine zu einer Längsmittellinie des betreffenden Schlitzes zu konvexe Kurve zugeordnet ist, wobei die Schaltrollensegmente in die Schaltscheibenschlitze einfahrbar und die Verriegelungsrollensegmente gegen die konvexen Kurven anlegbar sind, welche gegenüber den Schaltscheibenschlitzlängsflanken zurückgesetzt und in Richtung der Schaltachse versetzt angeordnet sind, und wobei die Schlitze, die Kurven und die Treiberfinger derart gestaltet und angeordnet sind, daß, ausgehend von einer Ruhestellung des Treibers, in der sich eine der Revolverkopf-Werkzeugstationen in Arbeitsposition befindet und die Verriegelungsrollensegmente zweier Treiberfinger gegen die beiden einander benachbarten Kurven zweier einander benachbarter Schaltscheibenschlitze spielfrei anliegen, durch Drehen des Treibers das Schaltrollensegment eines ersten dieser beiden Treiberfinger in einen ersten dieser beiden Schaltscheibenschlitze einfahrbar und der Revolverkopf dadurch in seine nächste Schaltstellung drehbar ist, wobei dieses Schaltrollensegment nur gegen die in Bewegungsrichtung des letzteren vorn liegende Längsflanke dieses ersten Schlitzes anliegt, und daß auch in dieser nächsten Schaltstellung das Verriegelungsrollensegment des ersten Treiberfingers sowie das Verriegelungsrollensegment eines anderen Treiberfingers gegen eine der beiden vorgenannten Kurven und gegen die dieser Kurve benachbarte Kurve des nächsten Schaltscheibenschlitzes spielfrei anliegen.

Die erfindungsgemäße Einrichtung zeichnet sich also dadurch aus, daß sich beiderseits desjenigen Drehwinkelbereichs des Treibers, über den letzterer die Schaltscheibe dreht, Treiberstellungen befinden, in denen die Schaltscheibe durch zwei Treiberfinger spielfrei verriegelt, d. h. gegen Verdrehen gesichert, und präzise in einer Schaltstellung gehalten wird, welche einer Arbeitsposition des Revolverkopfs entspricht, wobei die spielfreie Verriegelung nicht durch funktionelle Unzulänglichkeiten des Schaltvorgangs erkauft werden muß. Natürlich müssen auch bei der erfindungsgemäßen Einrichtung die Schaltscheibenschlitze und die diesen zugeordneten Kurven so bemessen werden, daß der eine der beiden Treiberfinger die Schaltscheibe freigibt, wenn der andere Treiberfinger die Schaltscheibe zu drehen beginnt.

Die Schlitze der Schaltscheibe können die Form von Nuten, aber auch die Form anderer kulissenartiger Bahnen der Schaltscheibe haben, zwischen die die Treiberfinger eingreifen und mit denen letztere zusammenwirken können. Die Schlitze oder dergleichen müssen auch nicht unbedingt gerade sein oder gar radial zur Schaltachse verlaufen, obwohl sich dies empfiehlt. Auch muß es sich bei den Treiberfingern nicht um längliche Elemente handeln, die nur an ihrem einen Ende vom Treiber gehalten werden - so könnte der Treiber z. B. die Gestalt zweier in axialem Abstand voneinander angeordneter Scheiben haben, zwischen denen sich die Treiberfinger in Form von Stäben erstrecken, so daß letztere mit mittleren Bereichen mit der Schaltscheibe zusammenwirken. Gerade an dem Beispiel, bei dem die Treiberfinger in Nuten der Schaltscheibe eingreifen, wird deutlich, daß sich diese Nuten nicht bis zum Außenumfang der Schaltscheibe (letztere in einer Stirnansicht betrachtet) erstrecken müssen und daß an die Stelle einer Schaltscheibe auch ein trommelförmiges Element treten kann.

Eine erfindungsgemäß gestaltete Werkzeugrevolver-Einrichtung bringt grundsätzlich die folgenden Vorteile mit sich: Da die Treiberfinger von frei drehbar gelagerten Rollen gebildet werden und ein Schaltrollensegment aufweisen, dessen Außendurchmesser kleiner als der Querabstand der beiden Längsflanken der Schaltscheibenschlitze voneinander ist, führt die Erfindung zu einer leicht und leise laufenden Schaltvorrichtung mit geringem Verschleiß und sehr präzisem Bewegungsablauf. Die Revolverkopf-Schaltvorrichtung bildet gleichzeitig die Mittel zum präzisen Verriegeln des Revolverkopfs in dessen Schaltstellungen und zum Entriegeln des Revolverkopfs, so daß nicht nur gesonderte Verriegelungsmittel, sondern auch eine weitere Betätigungsvorrichtung für diese Verriegelungsmittel entfallen können. Ein weiterer wesentlicher Vorteil besteht darin, daß die Übergänge zwischen Entriegeln, Drehen und Verriegeln des Revolverkopfs völlig harmonisch und ohne jegliche zeitliche Verzögerung stattfinden können, was ebenso zum Erzielen schneller Revolverschaltvorgänge beiträgt wie die Tatsache, daß unproduktive Nebenzeiten, wie sie beim Stand der Technik für das Entriegeln und Verriegeln des Revolverkopfs und den damit verbundenen Signalverkehr zwischen Werkzeugmaschine und Werkzeugmaschinensteuerung erforderlich sind, vermieden werden können. Beim Vergleich der erfindungsgemäßen Konstruktion mit dem Stand der Technik darf auch nicht außer acht gelassen werden, daß bei den bekannten Konstruktionen, werden kurze Revolverschaltzeiten verlangt, die vom Revolverkopf-Schaltantrieb bewirkte Drehwinkelpositionierung des Revolverkopfs nie exakt sein kann, besonders dann nicht, wenn der Revolverkopf bei einer entsprechenden Werkzeugbestückung eine erhebliche Unwucht aufweist, so daß der Revolverkopf erst anläßlich seiner Verriegelung, z. B. durch eine HIRTH-Verzahnung, endgültig in die ausgewählte Schaltstellung gedreht oder zurückgedreht wird.

Die Erfindung führt also nicht nur zu einer erheblichen Vereinfachung des Aufbaus einer Werkzeugrevolver-Einrichtung und damit zu beträchtlichen Kosteneinsparungen, sondern auch zu einer deutlichen Verkürzung der für das Weiterschalten des Revolverkopfs insgesamt erforderlichen Zeitintervalle.

Die Schaltscheibenschlitze könnten sich mit gleichbleibender Breite bis zum Schaltscheibenumfang erstrecken, wenn man letzteren nicht kreisförmig gestalten will und infolgedessen die Kurven Bereiche bilden können, welche in radialer Richtung über die äußeren Enden der Schaltscheibenschlitze vorspringen. Bevorzugt werden jedoch Ausführungsformen, bei denen sich jeder der Schaltscheibenschlitze im Bereich seines offenen Endes nach außen zu erweitert, um so die Möglichkeit zu schaffen, der Schaltscheibe eine kreisförmige Gestalt zu geben, ohne daß die Schaltscheibenschlitze ein Verdrehen des Treibers aus einer seiner Ruhestellungen heraus unmöglich machen.

Für eine spielfreie Verriegelung des Revolverkopfs in seinen Schaltstellungen ist es nur erforderlich, daß in den den Schaltstellungen des Revolverkopfs entsprechenden Ruhestellungen des Treibers zwei Treiberfinger spielfrei gegen zwei der Kurven der Schaltscheibe anliegen; dies läßt sich z. B. mit Kurven erreichen, welche einem Teil einer Ellipse oder einer Parabel entsprechen und so gewährleisten, daß die Verriegelung der Schaltscheibe und damit des Revolverkopfs ruckfrei erfolgt, wenn der Treiber in eine seiner Ruhestellungen gedreht wird. Damit man für den Treiber bzw. dessen Drehantrieb keine aufwendige Drehwinkel-Positionssteuerung benötigt, sind bei bevorzugten Ausführungsformen der Erfindung die Kurven jedoch zumindest über ihre wirksamen Bereiche kreisbogenförmig gestaltet, und zwar derart, daß die Kreisbögen der beiden einander zugewandten Kurven zweier einander benachbarter Schaltscheibenschlitze konzentrisch zur Treiber-Antriebsachse verlaufen, wenn der Revolverkopf und damit die Schaltscheibe eine seiner bzw. ihrer Schaltstellungen einnimmt. Eine solche Ausführungsform der erfindungsgemäßen Werkzeugrevolver-Einrichtung zeichnet sich also dadurch aus, daß die Kurven kreisbogenförmig gestaltet und so lang bemessen und angeordnet sind, daß, ausgehend von einer der Ruhestellungen des Treibers, über einen ersten Drehwinkelbereich des Treibers die zwei Treiberfinger sich entlang dieser beiden Kurven und gegen diese anliegend bewegen, ohne die Schaltscheibe zu drehen, über einen sich an den ersten Drehwinkelbereich anschließenden zweiten Drehwinkelbereich des Treibers der Revolverkopf durch den in den ersten Schaltscheibenschlitz eingreifenden ersten Treiberfinger in seine nächste Schaltstellung gedreht wird, und über einen sich an den zweiten Drehwinkelbereich anschließenden dritten Drehwinkelbereich des Treibers der erste und ein anderer Treiberfinger sich entlang einer dieser beiden Kurven sowie einer der letzteren benachbarten Kurve des nächsten Schaltscheibenschlitzes und gegen diese Kurven anliegend bewegen, ohne die Schaltscheibe zu drehen, so daß der Revolverkopf in dem ersten und dem dritten Drehwinkelbereich durch die Kurven und die Treiberfinger gegen Verdrehen gesichert ist. Die besonderen Merkmale einer solchen Konstruktion sind also, daß sich an denjenigen Drehwinkelbereich des Treibers, über den letzterer die Schaltscheibe und damit den Revolverkopf dreht, beiderseits Drehwinkelbereiche des Treibers anschließen, in denen einerseits eine Drehbewegung des Treibers keine Drehbewegung der Schaltscheibe zur Folge hat und andererseits letztere durch die Treiberfinger verriegelt, d. h. gegen Verdrehen gesichert, und so zusammen mit dem Revolverkopf präzise in einer Schaltstellung gehalten wird. Dann kommt es für ein präzises Positionieren des Revolverkopfs in seinen Schaltstellungen nicht darauf an, ob der Drehantrieb für den Treiber in der Lage ist, diesen genau in vorgegebenen Drehwinkelpositionen stillzusetzen, da der Treiber nach Durchlaufen des zweiten Drehwinkelbereichs irgendwo im dritten Drehwinkelbereich stillgesetzt werden kann, da der Treiber in jeder innerhalb dieses dritten Drehwinkelbereichs liegenden Drehwinkelposition die Schaltscheibe und damit den Revolverkopf präzise in einer der Schaltstellungen verriegelt. Der den Drehantrieb des Treibers bewerkstelligende Motor benötigt also keine aufwendige Positionssteuerung, denn jeder elektrische Getriebemotor mit Bremse oder Hydromotor ist in der Lage, den Treiber innerhalb des dritten Drehwinkelbereichs stillzusetzen.

Bei einer bevorzugten Ausführungsform der erfindungsgemäßen Werkzeugrevolver-Einrichtung besitzt der Treiber nur zwei Treiberfinger. Wie sich bei der Betrachtung der beigefügten zeichnerischen Darstellung einer besonders vorteilhaften Ausführungsform der erfindungsgemäßen Werkzeugrevolver-Einrichtung ohne weiteres ergibt, stellt eine Konstruktion, bei der der Treiber nur zwei Treiberfinger aufweist, zwar die einfachste Realisierung der Erfindung dar, jedoch sind auch Ausführungsformen denkbar, bei denen der Treiber mehr als zwei, z. B. drei Treiberfinger, besitzt - je nach der Anzahl der Werkzeugstationen und damit der Schaltstellungen des Revolverkopfs, der Gestaltung der Schaltscheibenschlitze, der Lage der Treiber-Antriebsachse relativ zur Schaltachse und nach der Größe des radialen Abstands der Treiberfinger von der Treiber-Antriebsachse und dem Drehwinkelabstand der Treiberfinger voneinander kann die Anzahl der Treiberfinger variieren.

Die besagten Kurven können unmittelbar an die Schaltscheibe angearbeitet sein, insbesondere durch Fräsen. Aus Fertigungsgründen kann es jedoch auch vorteilhaft sein, wenn die Kurven von an der Schaltscheibe befestigten separaten Teilen gebildet werden, da sich letztere leicht und kostengünstig sehr präzise fertigen lassen; andererseits erfordern derartige separate Teile besondere Maßnahmen, um sie genau positioniert an der Schaltscheibe befestigen zu können.

Zur Erzielung eines stoßfreien und harmonischen Bewegungsablaufs der Schaltvorrichtung empfiehlt es sich, die Konstruktion so auszubilden, daß - für die Treiberfinger und in Richtung der Schaltachse gesehen - die funktionellen Bereiche der Längsflanken der Schaltscheibenschlitze parallel zu Tangenten an die (radial) inneren Enden der Kurven verlaufen.

An sich ist es völlig ausreichend, wenn der Revolverkopf durch die erfindungsgemäße Schaltvorrichtung in seinen verschiedenen Schaltstellungen positioniert und präzise arretiert werden kann; im Hinblick darauf, daß beim Einsatz von vom Revolverkopf getragenen Werkzeugen ganz erhebliche Bearbeitungskräfte auf den Revolverkopf einwirken können, läßt sich die Stabilität der erfindungsgemäßen Werkzeugrevolver-Einrichtung jedoch dadurch noch weiter erhöhen, daß eines der um die Schaltachse drehbaren Teile, und zwar insbesondere der Revolverkopf, vorzugsweise durch einen gesteuert mit Druckmittel beaufschlagbaren Kolben gegen ein stationäres Teil der Revolverkopf-Tragvorrichtung anpreßbar ist, insbesondere gegen ein Gehäuse dieser Tragvorrichtung, nämlich dann, wenn der Revolverkopf seine gewünschte Schaltstellung erreicht hat. Der Hub dieses Druckmittelkolbens kann minimal sein, so daß zum Blockieren und Freigeben des Revolverkopfs kaum Druckmedium, wie z. B. Hydrauliköl, zu strömen braucht und infolgedessen für diese Vorgänge nur sehr wenig Zeit benötigt wird. Besonders einfach läßt sich dieses Prinzip dann verwirklichen, wenn der Druckmittelkolben nur einseitig (im Sinne des Anpressens des drehbaren Teils gegen das stationäre Teil) mit Druckmittel beaufschlagbar ist und wenigstens eine dem Druckmittelkolben zugeordnete Dichtung eine bei Druckentlastung wirksame Rückstellfeder für den Druckmittelkolben bildet, da in diesem Fall auf ein gesteuertes Zuführen von Druckmittel auf die andere Seite des Kolbens ebenso verzichtet werden kann wie auf eine gesonderte Rückstellfeder für den Druckmittelkolben.

Auch läßt sich die Beaufschlagung des Kolbens mit Druckmittel in einfacher Weise dadurch steuern, daß eine mit dem Treiber verdrehfest gekoppelte Steuerkurve vorgesehen wird, die ein Druckmittelventil in einer zum Druckmittelkolben führenden Druckmittelleitung steuert.

Wie bereits erwähnt, kommt es bei bevorzugten Ausführungsformen der erfindungsgemäßen Schaltvorrichtung nicht darauf an, daß der Treiber innerhalb des ersten bzw. dritten Drehwinkelbereichs in einer bestimmten Drehwinkelposition stillgesetzt wird; dieser Umstand ermöglicht das Vermeiden unproduktiver Nebenzeiten zum Blockieren bzw. Freigeben des Revolverkopfs mit Hilfe des erwähnten Druckmittelkolbens, nämlich dadurch, daß die genannte Steuerkurve derart ausgebildet wird, daß das Druckmittelventil im Anfangs- und Endabschnitt des ersten bzw. dritten Drehwinkelbereichs umgesteuert wird, um so den Revolverkopf über die übrigen Abschnitte der ersten und dritten Drehwinkelbereiche zu blockieren.

Im folgenden sollen anhand der beigefügten Zeichnung zwei Werkzeugrevolver-Einrichtungen beschrieben werden, von denen die erste teilweise und die zweite vollständig erfindungsgemäß ausgebildet ist und eine besonders vorteilhafte Ausführungsform der Erfindung darstellt; in der Zeichnung zeigen:
- Fig. 1: einen Längsschnitt durch die erste Werkzeugrevolver-Einrichtung, deren Revolverkopf beispielsweise acht Werkzeugstationen und damit acht Schaltstellungen hat, wobei die Fig. 1 die Werkzeugrevolver-Einrichtung in einem Zustand zeigt, den sie einnimmt, nachdem der Vorgang des Weiterschaltens des Revolverkopfs von einer seiner Schaltstellungen in die nächste Schaltstellung zur Hälfte abgelaufen ist;
- Fig. 2: den größten Teil der Schaltscheibe sowie den mit zwei Treiberfingern ausgestatteten Treiber der ersten Werkzeugrevolver-Einrichtung, gesehen in Richtung der Schaltachse, wobei die Fig. 2 einen Zustand zeigt, in dem die Schaltscheibe eine einer Schaltstellung des Revolverkopfs entsprechende Drehwinkelstellung einnimmt (weitere Positionen der Treiberfinger, die diese einnehmen können, ohne daß die Schaltscheibe gedreht wird, sind strichpunktiert angedeutet);
- Fig. 3: einen Schnitt nach der Linie 3-3 in Fig. 2;
- Fig. 4: eine Stirnansicht des Treibers der ersten Werkzeugrevolver-Einrichtung, wobei zur Erläuterung des Funktionsablaufs die drei vorstehend erwähnten Drehwinkelbereiche des Treibers im Falle von acht Werkzeugstationen des Revolverkopfs dargestellt wurden und außerdem die Steuerkurve angedeutet wurde, die der Steuerung des Festklemmens des Revolverkopfs dient;
- Fig. 5: einen Längsschnitt durch einen Teil der zweiten, erfindungsgemäßen Werkzeugrevolver-Einrichtung, wobei die Fig. 5 einem Ausschnitt aus Fig. 1 entspricht und eine der Fig. 3 entsprechende Darstellung beinhaltet; und
- Fig. 6: eine der Fig. 2 entsprechende Darstellung der erfindungsgemäßen Werkzeugrevolver-Einrichtung.

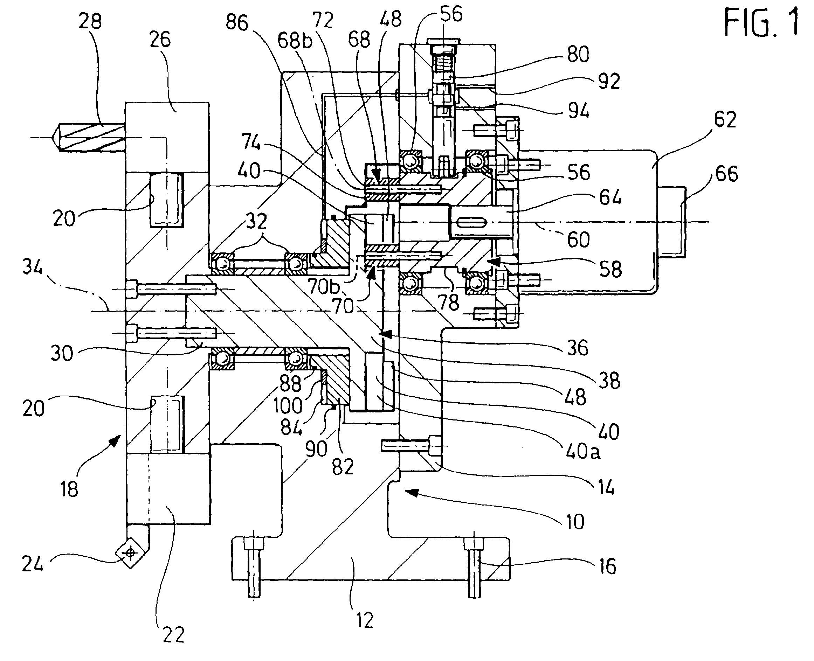

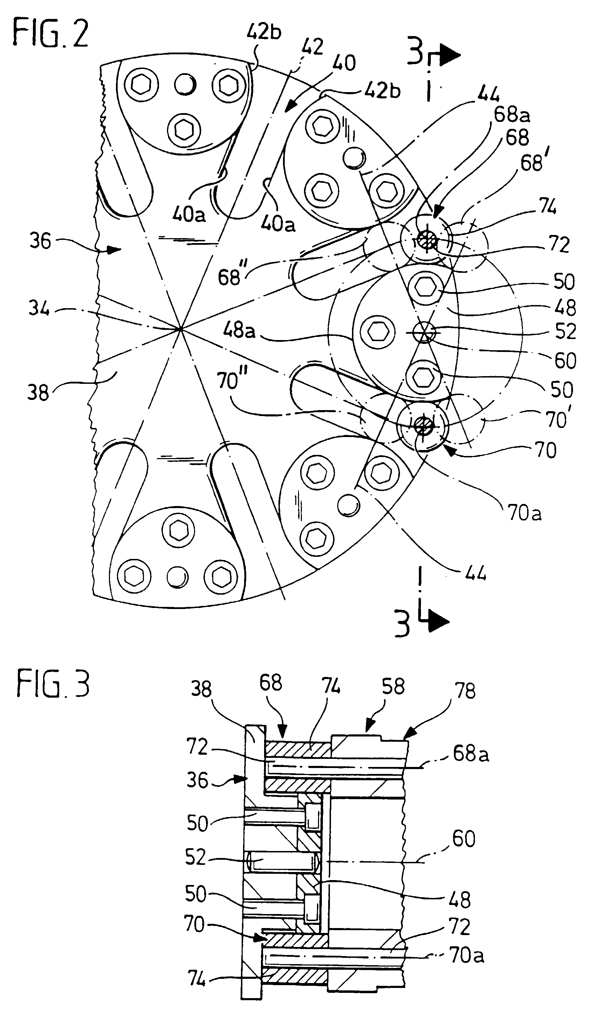

Die Fig. 1 zeigt eine Revolverkopf-Tragvorrichtung in Form eines Gehäuses 10 mit einem Gehäusekörper 12 und einem Gehäusedeckel 14, wobei sich dieses Gehäuse mittels Schrauben 16 z. B. auf einem nicht dargestellten Werkzeugträger-Schlitten einer Werkzeugmaschine anbringen läßt. Zu der dargestellten Werkzeugrevolver-Einrichtung gehört ferner eine Revolverkopf 18, der an seinem Umfang mit acht äquidistant angeordneten Werkzeugstationen 20 versehen ist, deren jede mit einem auswechselbaren Werkzeughalter bestückt werden kann. Die Fig. 1 zeigt zwei dieser Werkzeugstationen, deren eine mit einem einen Drehstahl 24 tragenden Werkzeughalter 22 und deren andere mit einem einen Bohrer 28 tragenden Werkzeughalter 26 bestückt ist (da Werkzeugrevolver für drehantreibbare Werkzeuge bekannt sind, könnten der Werkzeughalter 26 und die ihn aufnehmende Werkzeugstation 20 auch so ausgebildet sein, daß der Bohrer 28 als angetriebenes Werkzeug eingesetzt werden kann). Der Revolverkopf 18 ist an einen Ende einer Revolver-Schaltwelle 30 befestigt, die mittels Lagern 32 im Gehäusekörper 12 drehbar gelagert ist, so daß sich die Schaltwelle 30 und mit ihr der Revolverkopf 18 um eine Schaltachse 34 drehen lassen. Das andere, gemäß Fig. 1 rechte Ende der Schaltwelle 30 trägt eine Schaltscheibe 36, deren Aufbau und Gestaltung anhand der Fig. 2 näher erläutert werden soll.

Die Schaltscheibe 36 hat einen zur Schaltachse 34 konzentrischen, kreisrunden Scheibenkörper 38 mit einer der Zahl der Werkzeugstationen 20 des Revolverkopfs 18 entsprechenden Anzahl von in gleichen Drehwinkelabständen voneinander angeordneten Schlitzen 40, die die Gestalt von Nuten haben, welche von der einen Stirnseite des Scheibenkörpers 38 her in diesen eingearbeitet sind. Jeder der Schlitze 40 ist spiegelsymmetrisch zu einer Mittelebene 42 ausgebildet, die die Schaltachse 34 enthält und eine Durchmesserebene des Scheibenkörpers 38 darstellt. Jeder der Schlitze 40 umfaßt zwei Bereiche, nämlich einen inneren, in radialer Richtung innerhalb einer senkrecht auf der zugehörigen Mittelebene 42 stehenden Linie 44 liegenden ersten Bereich und einen äußeren, außerhalb der Linie 44 liegenden zweiten Bereich, wobei, sieht man von einer am radial inneren Schlitzende vorgesehenen, funktionslosen Ausrundung ab, die Seitenwände 40a des inneren Schlitzbereichs parallel zueinander verlaufen, während die Seitenwände des äußeren Schlitzbereichs von Kurven 42b definiert werden, auf deren Gestaltung später noch näher eingegangen werden wird.

Zwischen einander benachbarten Schlitzen 40 ist auf dem Scheibenkörper 38 jeweils eine Positionierscheibe 48 befestigt, und zwar mittels Schrauben 50 (siehe insbesondere Fig. 3), und jede dieser Positionierscheiben hat die Gestalt eines Abschnitts eines flachen kreiszylindrischen Körpers mit einer kreiszylindrischen Umfangefläche 48a. Wie sich aus den Figuren 2 und 3 ergibt, werden die Kurven 42b von Teilen dieser Umfangsflächen 48a gebildet und stehen (in einer Stirnansicht der Schaltscheibe 36) außerhalb der Linie 44 etwas über die eigentlichen Seitenwände 40a der in den Scheibenkörper 38 eingearbeiteten Schlitze 40 über, und zwar in Richtung auf die zu dem betreffenden Schlitz gehörende Mittelebene 42, so wie dies die Fig. 3 deutlich erkennen läßt. Da es für die Genauigkeit der Positionierung des Revolverkopfs in seinen verschiedenen Schaltstellungen entscheidend auf die genaue Lage der Positionierscheiben 48 auf dem Scheibenkörper 38 ankommt, ist für jede Positionierscheibe ein Paßstift 52 vorgesehen, der in Bohrungen der Positionierscheibe und des Scheibenkörpers 38 eingreift.

Im folgenden soll nun anhand der Fig. 1 der weitere Aufbau dieser Werkzeugrevolver-Einrichtung beschrieben werden.

Im Gehäusedeckel 14 ist mittels zweier Lager 56 ein dem Drehen der Schaltscheibe 36 dienender Treiber 58 um eine Treiberantriebsachse 60 drehbar gelagert; dieser Treiber kann durch einen auf dem Gehäusedeckel 14 angebrachten Motor 62 angetrieben werden und ist zu diesem Zweck mit einer Motorwelle 64 drehfest verbunden. Auf dem Motor 62 sitzt noch eine den Motor 62 ein- und ausschaltende Schalteinrichtung 66, bei der es sich vorzugsweise um eine elektrische Schalteinrichtung handelt, die in der Lage ist, die Motorwelle 64 zumindest ungefähr in gewünschten Winkellagen stillzusetzen.

Wie besonders deutlich die Figuren 2 und 3 erkennen lassen, ist der Treiber 58 an seiner der Schaltscheibe 36 zugekehrten Stirnseite mit zwei Treiberfingern 68 und 70 versehen, deren jeder aus einem im Treiber 58 befestigten Lagerstift 72 und einer auf letzterem frei drehbaren, walzenförmigen Rolle 74 besteht. Die in gleichen Abständen von der Antriebsachse 60 angeordneten Achsen 68a und 70a der beiden Treiberfinger 68 und 70 liegen bezüglich der Antriebsachse 60 einander gegenüber, d. h. in einer Durchmesserebene des Treibers 58, so daß der Drehwinkelabstand der beiden Treiberfinger 180° beträgt.

In jeder Schaltstellung des Revolverkopfs 18 liegt das Zentrum der kreiszylindrischen Umfangsfläche 48a derjenigen Positionierscheibe 48, die der sich in Arbeitsposition befindlichen Werkzeugstation 20 des Revolverkopfs 18 zugeordnet ist, auf der Treiber-Antriebsachse 60 (sh. Fig. 2).

Der Abstand der Achsen 68a und 70a der Treiberfinger 68 und 70 von der Treiber-Antriebsachse 60 ist auf den Treiberfingerdurchmesser, d. h. den Durchmesser der Rollen 74, und den Abstand der einander zugewandten Kurven 42b zweier einander benachbarter Schlitze 40, also auf den Durchmesser der kreiszylindrischen Umfangsfläche 48a der Positionsscheiben 48, so abgestimmt, daß die Treiberfinger spielfrei gegen diese Kurven 42b anliegen, bei der dargestellten Konstruktion laufen die Rollen 74 also spielfrei auf den Kurven 42b ab.

Die Breite der Schlitze 40 innerhalb der Linie 44, d. h. der Abstand der Seitenwände 40a voneinander, ist nur geringfügig größer als der Durchmesser der Treiberfinger, im besonderen Fall der Rollen 74.

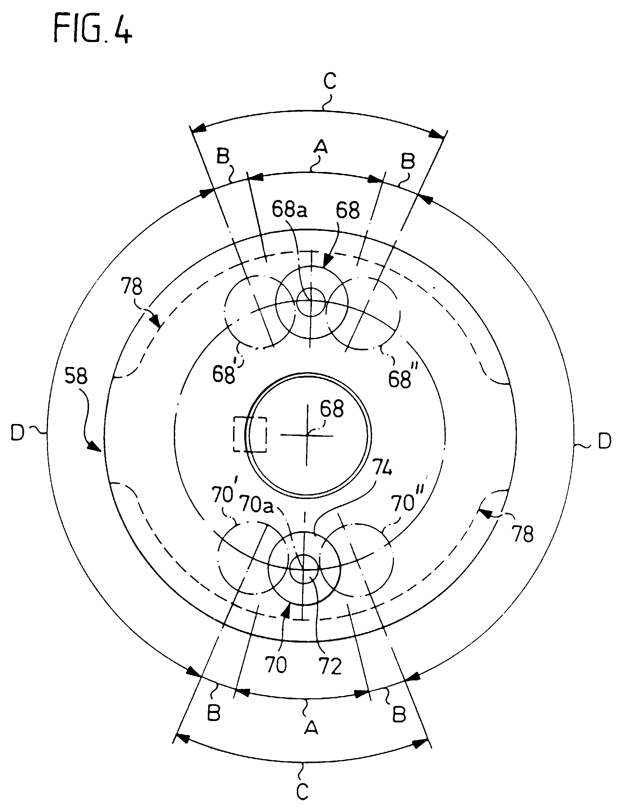

Auf dem Umfang des Treibers 58 ist eine Kurve 78 ausgebildet (siehe Figuren 3 und 4), die der Steuerung eines im Gehäusedeckel 14 untergebrachten Ventils 80 dient, dessen Funktion später noch erläutert werden wird.

Wie die Fig. 1 erkennen läßt, steht die rückwärtige Stirnseite des Revolverkopfs 18 einer vorderen Stirnfläche des Gehäusekörpers 12 unmittelbar gegenüber. Des weiteren nimmt der Gehäusekörper 12 einen ringförmigen, die Schaltwelle 30 umfassenden Druckmittelkolben 82 auf und bildet für diesen mit einer abgestuften Bohrung einen Druckmittelraum 84, in den ein vom Ventil 80 kommender Druckmittelkanal 86 mündet. Der Druckmittelkolben 82 steht der Schaltscheibe 36, bei der dargestellten Konstruktion der von den Positionierscheiben 48 abgewandten Stirnseite des Scheibenkörpers 38, unmittelbar gegenüber, und der Druckmittelraum 84 befindet sich auf der von der Schaltscheibe 36 abgewandten Seite des Druckmittelkolbens 82. Der Abdichtung des Druckmittelraums 84 dienen zwei vom Druckmittelkolben 82 und/oder vom Gehäusekörper 12 gehaltene Dichtringe 88 und 90, die in axialer Richtung derart elastisch verformbar sind, daß sie eine Rückstellung des Druckmittelkolbens 82 (gemäß Fig. 1 nach links) bewerkstelligen können, nachdem dieser durch Druckbeaufschlagung seiner gemäß Fig. 1 linken Seite gegen die Schaltscheibe 36 gepreßt und anschließend der Druckmittelraum 84 wieder drucklos gemacht wurde.

Der Revolverkopf 18 gleitet beim Weiterschalten auf der dem Revolverkopf zugewandten Stirnseite des Gehäusekörpers 12 oder es ist in diesem Zustand der Werkzeugrevolver-Einrichtung nur ein ganz geringfügiger Spalt zwischen Revolverkopf und Gehäusekörper vorhanden. Um den Revolverkopf 18 gegen den Gehäusekörper 12 zu pressen und ihn so an einem stationären Teil festzuklemmen, genügt also eine ganz geringfügige Bewegung des Druckmittelkolbens 82, so daß hierfür im Druckmittelkanal 86 so gut wie kein Druckmittel strömen muß.

Dem Druckmittelkanal 86 läßt sich über das Ventil 80 und einen im Gehäusedeckel 14 ausgebildeten Druckmittelkanal 92 Druckmittel, insbesondere Hydrauliköl, zuführen, während ein Druckmittelkanal 94 der Druckentlastung des Druckmittelraums 84 dient.

Es soll noch darauf hingewiesen werden, daß ein übliches axiales Spiel der die Schaltwelle 30 haltenden Lager 32 völlig ausreichend ist, um mit Hilfe des Druckmittelkolbens 82 den Revolverkopf 18 am Gehäusekörper 12 zu verspannen.

Die Treiberfinger 68, 70 sind so lang ausgebildet, daß sie nicht nur mit den Positionierscheiben 48 zusammenwirken können, sondern auch mit den Seitenwänden 40a der im Scheibenkörper 38 ausgebildeten Schlitze 40.

Die Fig. 1 läßt schließlich noch einen Zwischenring 100 erkennen, durch den sich trotz der Ausbildung des Druckmittelraums 84 sicherstellen läßt, daß der Druckmittelkolben 82 zum Festklemmen des Revolverkopfs 18 nur einen ganz minimalen Hub durchführt, dessen Größe sich durch Abpassen des Zwischenrings 100 bestimmen läßt.

Im folgenden sollen nun insbesondere anhand der Figuren 2 und 4 die Funktion der Revolverkopf-Schaltvorrichtung und der Bewegungsablauf beim Weiterschalten des Revolverkopfs näher beschrieben werden. Dabei erfolgt diese Beschreibung anhand der dargestellten Konstruktion mit acht Werkzeugstationen des Revolverkopfs; die für eine andere Anzahl von Werkzeugstationen geltenden Abmessungsänderungen ergeben sich jedoch für den Fachmann von selbst.

In den Figuren 2 und 4 wurden die verschiedenen, mit ausgezogenen und strichpunktierten Linien dargestellten Positionen der Treiberfinger 68 und 70 mit entsprechenden Bezugszeichen gekennzeichnet, nämlich mit 68', 68, 68'' bzw. 70', 70, 70''. Außerdem wurden in Fig. 4 mehrere Drehwinkelbereiche des Treibers 58 mit A, B, C und D bezeichnet, wobei bei der dargestellten Konstruktion mit acht Stationen der Drehwinkelbereich C 45° und der Drehwinkelbereich D 135° beträgt, die Summe aus C und D also 180°; außerdem beträgt die Summe (A + 2B) 45°. Bei einem Revolverkopf mit nur 6 äquidistanten Werkzeugstationen würde der Drehwinkelbereich D vorzugsweise 120° betragen.

Es sei nun angenommen, daß bei einem vorausgegangenen Schaltvorgang der Motor 62 den Treiber 58 in derjenigen Drehwinkelposition stillgesetzt hat, in der seine Treiberfinger 68 und 70 die in den Figuren 2 und 4 mit ausgezogenen Linien dargestellten Drehwinkelpositionen einnehmen.

Eine halbe Umdrehung des Treibers 58, d. h. eine Drehung um ca. 180°, führt dazu, daß der Revolverkopf 18 von einer Schaltstellung in eine der beiden dieser Schaltstellung benachbarten Schaltstellungen weitergedreht wird - der Revolverkopf läßt sich durch die Schaltvorrichtung in beiden Drehrichtungen drehen, da die Schaltvorrichtung in dieser Beziehung völlig symmetrisch ausgebildet ist. Innerhalb des Drehwinkelbereichs C, d. h. zwischen den Positionen 68' und 68'' bzw. 70' und 70'', bewegen sich die Treiberfinger 68, 70 längs der Kurven 42b, ohne die Schaltscheibe 36 und damit den Revolverkopf 18 zu drehen, vielmehr ist letzterer über den ganzen Drehwinkelbereich C in seiner jeweiligen Schaltstellung verriegelt. Nimmt man an, daß der Treiber 58 gemäß den Figuren 2 und 4 im Gegenuhrzeigersinn gedreht wird, hebt zu Beginn des Drehwinkelbereichs D der Treiberfinger 68 von der Positionierscheibe 48 ab und läuft auf der sich an den Positionierscheibenumfang anschließenden Seitenwand 40a des jeweiligen Schlitzes 40 entlang; da der Treiberfinger 70 aus dem ihm zugeordneten Schlitz 40 herausläuft und von der benachbarten Kurve 42b freikommt, wenn der Treiberfinger 68 die Positionierscheibe 48 verläßt, kann in diesem Augenblick die Drehung der Schaltscheibe 36 und damit des Revolverkopfs 18 beginnen. Während der Treiber den Drehwinkelbereich D durchläuft, wird der Revolverkopf 18 um den Winkelabstand zweier benachbarter Werkzeugstationen, bei acht Werkzeugstationen also um 45°, weitergedreht. Am Ende des Drehwinkelbereichs D, d. h. wenn wieder ein Drehwinkelbereich C beginnt, geht der Treiberfinger 68 von einer der Seitenwände 40a auf die Umfangsfläche 48a der nächsten Positionierscheibe 48 über, und gleichzeitig tritt der Treiberfinger 70 in den übernächsten Schlitz 40 ein und kontaktiert gleichfalls die nächste Positionierscheibe 48. Da die Drehbewegung des Revolverkopfs 18 nach Durchlaufen des Drehwinkelbereichs D beendet ist, ist es unerheblich, ob der Treiber 58 zum Weiterschalten des Revolverkopfs von einer Schaltstellung in eine nächste Schaltstellung genau um 180° gedreht wird, da es, wie im folgenden noch gezeigt werden wird, nur darauf ankommt, daß der Treiber 58 innerhalb des Drehwinkelbereichs A stillgesetzt wird, so daß die das Anlaufen und Anhalten des Motors 62 steuernde Schalteinrichtung 66 nicht für ein drehwinkelgenaues Schalten eingerichtet sein muß.

Die das Ventil 80 und damit das Klemmen des Revolverkopfs 18 steuernde Kurve 78 ist nun so ausgebildet, daß das Ventil 80 an den Enden des Drehwinkelbereichs A umgesteuert wird, und zwar derart, daß zu Beginn des Vorgangs des Weiterschaltens des Revolverkopfs beim Durchlaufen des Drehwinkelbereichs B durch den Treiber 58 der über den Drehwinkelbereich A mit Drucköl beaufschlagte Druckmittelraum 84 drucklos gemacht wird, während nach erfolgter Drehung des Revolverkopfs, und zwar nachdem der Treiber die Drehwinkelbereiche D und B durchlaufen hat, der Druckmittelkolben 82 wieder mit Druckmittel beaufschlagt und der Revolverkopf 18 am Gehäuse 10 geklemmt wird - die kurze, für ein Durchlaufen des Drehwinkelbereichs B erforderliche Zeitspanne genügt, die Klemmung des Revolverkopfs 18 zu lösen. Der Revolverkopf kann so in beiden Drehrichtungen weitergeschaltet werden.

Während bei der Werkzeugrevolver-Einrichtung gemäß den Figuren 1 bis 4 der Treiber 58 innerhalb des Drehwinkelbereichs A stillgesetzt werden muß, stünde bei einer solchen Werkzeugrevolver-Einrichtung ohne Klemmung des Revolverkopfs für das Stillsetzen des Treibers der größere Drehwinkelbereich C zur Verfügung.

Wesentlich ist, daß der eine Treiberfinger die eine der Kurven 42b freigibt (weil letztere dann endet), wenn der andere Treiberfinger eine Drehwinkelposition erreicht hat, in der er die Schaltscheibe 36 zu drehen beginnt.

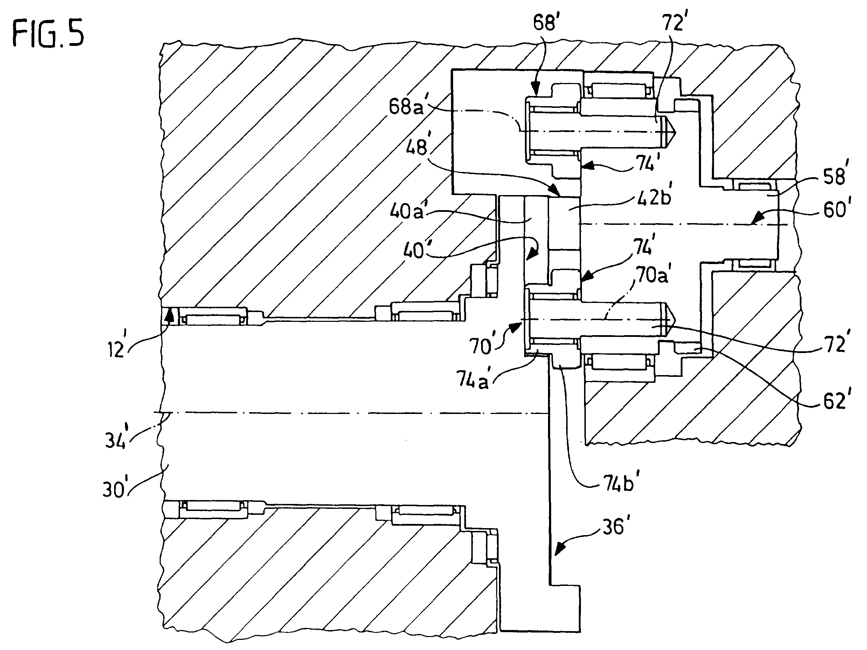

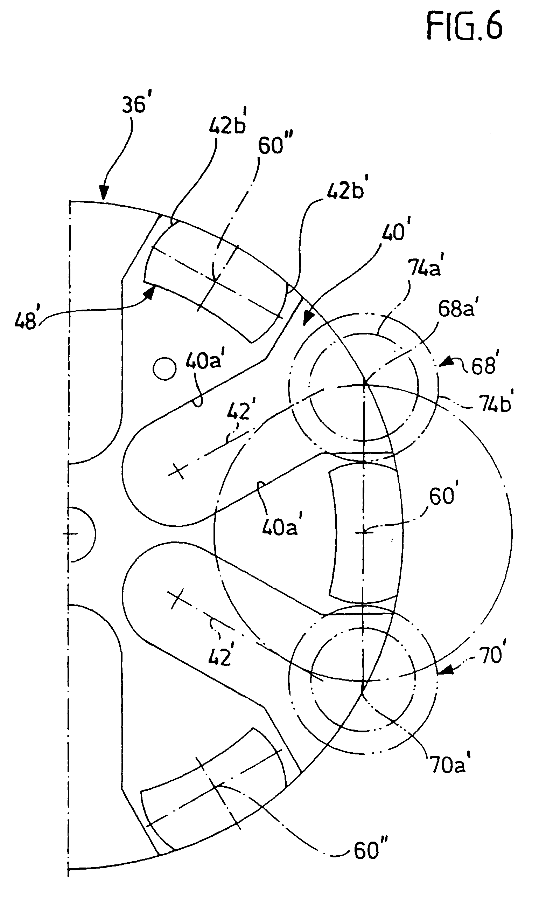

Die in den Figuren 5 und 6 dargestellten Teile der insgesamt der Erfindung entsprechenden Werkzeugrevolver-Einrichtung werden im folgenden im wesentlichen nur insoweit beschrieben, als diese Einrichtung von derjenigen nach den Figuren 1 bis 4 abweicht, und in den Figuren 5 und 6 wurden für diejenigen Teile der zweiten Einrichtung, welche Äquivalente zu Teilen der ersten Einrichtung darstellen, dieselben Bezugszeichen wie in den Figuren 1 - 3 verwendet, jedoch unter Hinzufügen eines Strichs.

Bei der zweiten, erfindungsgemäßen Einrichtung ist wiederum an der in einem Gehäusekörper 12' um eine Schaltachse 34' drehbar gelagerten Revolver-Schaltwelle 30' eine Schaltscheibe 36' vorgesehen, die für jede Schaltstellung des Revolverkopfs einen randoffenen und als Nut gestalteten Schaltscheibenschlitz 40' aufweist, dessen funktioneller Bereich von zwei zueinander parallelen Längsflanken 40a' gebildet wird und der sich in seinem radial äußeren Bereich nach außen zu erweitert. An der gemäß Fig. 5 rechten Stirnseite der Schaltscheibe 36' wurden durch Fräsen Positionierkörper 48' ausgebildet, deren Anzahl der Zahl der Schlitze 40' entspricht, deren jeder drehwinkelmäßig mittig zwischen zwei Schlitzen 40' liegt und von denen jeder zwei Kurven 42b' bildet, wobei die beiden Kurven 42b' eines jeden Positionierkörpers 48' Teile der Mantelfläche eines Kreiszylinders bilden, dessen Achse 60'' parallel zur Schaltachse 34' verläuft und drehwinkelmäßig genau in der Mitte zwischen den Mittelebenen 42' der beiden benachbarten Schlitze 40' liegt.

Ein um eine Treiberantriebsachse 60' drehbar gelagerter und mittels einer Antriebsverzahnung 62' drehantreibbarer Treiber 58' ist wieder mit zwei drehwinkelmäßig um 180° gegeneinander versetzte Treiberfinger 68' und 70' versehen, deren jeder einen im Treiber 58' befestigten Lagerstift 72' aufweist, auf dem eine als abgestufte Walze gestaltete Rolle 74' drehbar gelagert ist. Diese Rolle bildet ein Verriegelungsrollensegment 74b' und ein Schaltrollensegment 74a', dessen Durchmesser kleiner ist als derjenige des Verriegelungsrollensegments 74b'. Wie insbesondere die Fig. 6 erkennen läßt, wirken die Schaltrollensegmente 74a' mit den Längsflanken 40a' der Schlitze 40' zusammen, die Verriegelungsrollensegmente 74b' mit den Kurven 42b' der Positionierkörper 48'.

Wie sich gleichfalls aus Fig. 6 ergibt, fällt bei sich in einer seiner Schaltstellungen befindlichem Revolverkopf und bei sich in einer seiner beiden Ruhestellungen befindlichem Treiber 58' dessen Antriebsachse 60' mit der Achse 60'' des gerade wirksamen Positionierkörpers 48' zusammen.

Auch bei der Einrichtung nach den Figuren 5 und 6 sind die Schlitze 40' und die Kurven 42b' so gestaltet und angeordnet, daß wenn einer der beiden Treiberfinger beginnt, die Schaltscheibe 36' zu drehen, der andere Treiberfinger die Schaltscheibe freigibt. Außerdem gehen die Vorgänge des Verriegelns der Schaltscheibe 36' und des Weiterschaltens der Schaltscheibe harmonisch und stoßfrei ineinander über, weil die Längsflanken 40a' der Schlitze 40' und die Kurven 42b' der Positionierkörper 48' so lang bemessen und relativ zueinander so angeordnet sind, daß für die Rollen 74' des Treibers 58' die Kurven 42b' stetig in die Längsflanken 40a' übergehen und die letzteren Tangenten an die radial inneren Enden der Kurven 42b' bilden (wegen der unterschiedlichen Durchmesser von Schaltrollensegment 74a' und Verriegelungsrollensegment 74b' mit einem Querversatz der Kurven 42b' gegenüber den Längsflanken 40a'). Die Lücken zwischen den das Verriegeln bewirkenden Kurven müssen nicht gleich groß sein wie die Breite der das Weiterschalten bewirkenden Schlitze.

## Patentansprüche

1. Werkzeugrevolver-Einrichtung für Werkzeugmaschinen, mit einer Revolverkopf-Tragvorrichtung (12'), an der ein mehrere Werkzeugstationen (20) aufweisender Revolverkopf (18) um eine Schaltachse (34') drehbar angebracht ist, einer Revolverkopf-Schaltvorrichtung (36', 58') zum Drehen des Revolverkopfs (18) aus einer Schaltstellung, in der sich eine seiner Werkzeugstationen (20) in einer Arbeitsposition befindet, in eine andere Schaltstellung, in der sich eine andere Werkzeugstation (20) in Arbeitsposition befindet, sowie mit Verriegelungsmitteln (74b', 48') zum Halten des Revolverkopfs (18) in seinen Schaltstellungen und zur Drehfreigabe des Revolverkopfs während des Weiterschaltens, wobei die Revolverkopf-Schaltvorrichtung (36', 58') eine zusammen mit dem Revolverkopf um die Schaltachse (34') drehbare und mit dem Revolverkopf drehfest verbundene Malteserkreuz-ähnliche Schaltscheibe (36') mit jeweils einem am Schaltscheibenumfang offenen und mit zwei Längsflanken (40a') versehenen Schlitz (40') pro Werkzeugstation (20) des Revolverkopfs und einen Treiber (58') aufweist, der um eine zur Schaltachse (34') parallele Antriebsachse (60') drehantreibbar ist und exzentrisch zu letzterer mindestens zwei Treiberfinger (68', 70') zum Einfahren in einen Schaltscheibenschlitz (40'), zum Weiterschalten der Schaltscheibe (36') und zum Herausfahren aus dem Schaltscheibenschlitz trägt, die mit gleichen radialen Abständen von der Treiber-Antriebsachse (60') und in einem Drebwinkelabstand voneinander angeordnet sind, **dadurch gekennzeichnet**, daß die Treiberfinger (68', 70') von am Treiber (58') um zur Treiberantriebsachse (60') parallele Achsen (68a', 70a') frei drehbar gelagerten Rollen (74') gebildet werden und jeder Treiberfinger ein Verriegelungsrollensegment (74b') mit einem ersten Außendurchmesser sowie ein Schaltrollensegment (74a') mit einem zweiten, kleineren Außendurchmesser besitzt, welchletzterer kleiner als der Querabstand der beiden Längsflanken (40a') der Schaltscheibenschlitze (40') voneinander ist, und daß jeder Längsflanke (40a') eines jeden der Schaltscheibenschlitze (40') eine zu einer Längsmittellinie (42') des betreffenden Schlitzes (40') zu konvexe Kurve (42b') zugeordnet ist, wobei die Schaltrollensegmente (74a') in die Schaltscheibenschlitze (40') einfahrbar und die Verriegelungsrollensegmente (74b') gegen die konvexen Kurven (42b) anlegbar sind, welche gegenüber den Schaltscheibenschlitzlängsflanken (40a') zurückgesetzt und in Richtung der Schaltachse (34') versetzt angeordnet sind, und wobei die Schlitze (40'), die Kurven (42b') und die Treiberfinger (68', 70') derart gestaltet und angeordnet sind, daß, ausgehend von einer Ruhestellung des Treibers (58'), in der sich eine der Revolverkopf-Werkzeugstationen (20) in Arbeitsposition befindet und die Verriegelungsrollensegmente (74b') zweier Treiberfinger (68', 70') gegen die beiden einander benachbarten Kurven (42b') zweier einander benachbarter Schaltscheibenschlitze (40') spielfrei anliegen, durch Drehen des Treibers (58') das Schaltrollensegment (74a') eines ersten dieser beiden Treiberfinger (68', 70') in einen ersten dieser beiden Schaltscheibenschlitze (40') einfahrbar und der Revolverkopf (18) dadurch in seine nächste Schaltstellung drehbar ist, wobei dieses Schaltrollensegment (74a') nur gegen die in Bewegungsrichtung des letzteren vorn liegende Längsflanke (40a') dieses ersten Schlitzes (40') anliegt, und daß auch in dieser nächsten Schaltstellung das Verriegelungsrollensegment (74b') des ersten Treiberfingers (68' bzw. 70') sowie das Verriegelungsrollensegment (74b') eines anderen Treiberfingers (70' bzw. 68') gegen eine der beiden vorgenannten Kurven (42b') und gegen die dieser Kurve benachbarte Kurve (42b') des nächsten Schaltscheibenschlitzes (40') spielfrei anliegen.

2. Einrichtung nach Anspruch 1, dadurch gekennzeichnet, daß sich jeder der Schaltscheibenschlitze (40') im Bereich seines offenen Endes nach außen zu erweitert.

3. Einrichtung nach Anspruch 1 oder 2, dadurch gekennzeichnet, daß die Kurven (42b') so gestaltet sind, daß die Treiberfinger (68', 70') während des Drehens des Revolverkopfs (18) außer Kontakt mit den Kurven (42b') sind.

4. Einrichtung nach einem oder mehreren der vorstehenden Ansprüche, dadurch gekennzeichnet, daß die Kurven (42b') kreisbogenförmig gestaltet und so lang bemessen und angeordnet sind, daß, ausgehend von einer der Ruhestellungen des Treibers (58'), über einen ersten Drehwinkelbereich (C) des Treibers (58') die zwei Treiberfinger (68', 70') sich entlang dieser beiden Kurven (42b') und gegen diese anliegend bewegen, ohne die Schaltscheibe (36') zu drehen, über einen sich an den ersten Drehwinkelbereich (C) anschließenden zweiten Drehwinkelbereich (D) des Treibers (58') der Revolverkopf (18) durch den in den ersten Schaltscheibenschlitz (40') eingreifenden ersten Treiberfinger (68' bzw. 70') in seine nächste Schaltstellung gedreht wird, und über einen sich an den zweiten Drehwinkelbereich (D) anschließenden dritten Drehwinkelbereich (C) des Treibers (58') der erste und ein anderer Treiberfinger (68', 70') sich entlang einer dieser beiden Kurven (42b') sowie einer der letzteren benachbarten Kurve (42b') des nächsten Schaltscheibenschlitzes (40') und gegen diese Kurven anliegend bewegen, ohne die Schaltscheibe (36') zu drehen, so daß der Revolverkopf (18) in dem ersten und dem dritten Drehwinkelbereich (C) durch die Kurven (42b') und die Treiberfinger (68', 70') gegen Verdrehen gesichert ist.

5. Einrichtung nach den Ansprüchen 3 und 4, dadurch gekennzeichnet, daß die Kurven (42b') so lang bemessen sind, daß am Übergang vom ersten zum zweiten Drehwinkelbereich (C bzw. D) der sich aus einem der beiden Schaltscheibenschlitze (40') herausbewegende Treiberfinger (68' bzw. 70') von der ihm benachbarten Kurve (42b') freikommt.

6. Einrichtung nach einem oder mehreren der vorstehenden Ansprüche, dadurch gekennzeichnet, daß der Treiber (58') nur zwei Treiberfinger (68', 70') aufweist.

7. Einrichtung nach Anspruch 6, dadurch gekennzeichnet, daß der Drehwinkelabstand der Treiberfinger (68', 70') voneinander 180° beträgt.

8. Einrichtung nach den Ansprüchen 4 und 7, dadurch gekennzeichnet, daß die Summe der drei Drehwinkelbereiche (C/2, D, C/2) 180° beträgt.

9. Einrichtung nach einem oder mehreren der Ansprüche 4 - 8, dadurch gekennzeichnet, daß der erste und der dritte Drehwinkelbereich (C) gleich groß sind.

10. Einrichtung nach den Ansprüchen 8 und 9, dadurch gekennzeichnet, daß der zweite Drehwinkelbereich (D) mindestens 90° beträgt und kleiner als 160° ist.

11. Einrichtung nach Anspruch 10, dadurch gekennzeichnet, daß der zweite Drehwinkelbereich (D) ungefähr 135° beträgt.

12. Einrichtung nach Anspruch 10, dadurch gekennzeichnet, daß der zweite Drehwinkelbereich (D) ungefähr 120° beträgt.

13. Einrichtung nach einem oder mehreren der vorstehenden Ansprüche, dadurch gekennzeichnet, daß in der Ruhestellung des Treibers (58') die Treiber-Antriebsachse (60') zwischen zwei einander benachbarten Schlitzen (40') verläuft und die beiden einander zugewandten Kurven (42b') dieser beiden Schlitze zur Treiber-Antriebsachse (60') symmetrisch sind.

14. Einrichtung nach einem oder mehreren der vorstehenden Ansprüche, dadurch gekennzeichnet, daß die Schlitze (40') bezüglich der Schaltachse (34') radial orientiert und jeweils zu einer die Schaltachse (34') enthaltenden Mittelebene (42') symmetrisch ausgebildet sind.

15. Einrichtung nach einem oder mehreren der vorstehenden Ansprüche, dadurch gekennzeichnet, daß die einander zugewandten Kurven (42b') zweier einander benachbarter Schaltscheibenschlitze (40') von einem beiden Kurven gemeinsamen scheibenförmigen Körper (48') gebildet werden, dessen Umfang die Gestalt mindestens eines Teils eines Kreises hat.

16. Einrichtung nach Anspruch 15, dadurch gekennzeichnet, daß der Umfang des Körpers (48') zumindest in zwei einander gegenüberliegenden Bereichen kreisbogenförmig gestaltet ist.

17. Einrichtung nach einem oder mehreren der vorstehenden Ansprüche, gekennzeichnet durch einen Treiber-Antriebsmotor (62), welcher als elektrischer Getriebemotor oder als Hydromotor ausgebildet ist.

18. Einrichtung nach Anspruch 17, dadurch gekennzeichnet, daß dem Treiber-Antriebsmotor (62) eine drehwinkelgesteuerte Schalteinrichtung (66) zugeordnet ist.

19. Einrichtung nach einem oder mehreren der vorstehenden Ansprüche, dadurch gekennzeichnet, daß die Längsflanken (40a') der Schaltscheibenschlitze (40') parallel zu Tangenten an die inneren Enden der Kurven (42b') verlaufen.

20. Einrichtung nach einem oder mehreren der vorstehenden Ansprüche, dadurch gekennzeichnet, daß eines der um die Schaltachse (34') drehbaren Teile (18, 38') durch einen Druckmittelkolben (82) gegen ein stationäres Teil (12) der Revolverkopf-Tragvorrichtung (10) anpreßbar ist.

21. Einrichtung nach Anspruch 20, dadurch gekennzeichnet, daß das drehbare Teil der Revolverkopf (18) ist.

22. Einrichtung nach Anspruch 20 oder 21, dadurch gekennzeichnet, daß der Druckmittelkolben (82) nur einseitig - im Sinne des Anpressens des drehbaren Teils (18) gegen das stationäre Teil (12) - mit Druckmittel beaufschlagbar ist und wenigstens eine dem Druckmittelkolben (82) zugeordnete Dichtung (88, 90) eine bei Druckentlastung wirksame Rückstellfeder für den Druckmittelkoben bildet.

23. Einrichtung nach einem oder mehreren der Ansprüche 20 bis 22, gekennzeichnet durch eine mit dem Treiber (58') verdrehfest gekoppelte Steuerkurve (78) zur Steuerung eines Druckmittelventils (80) in einer zum Druckmittelkolben (82) führenden Druckmittelleitung (86, 92, 94).

24. Einrichtung nach den Ansprüchen 4 und 23, dadurch gekennzeichnet, daß die Steuerkurve (78) derart ausgebildet ist, daß das Druckmittelventil (80) in Anfangs- und Endabschnitten des ersten bzw. dritten Drehwinkelbereichs (C) umsteuerbar ist, um so das drehbare Teil (18) über die übrigen Abschnitte (A) der ersten und dritten Drehwinkelbereiche (C) zu blockieren.

## Claims

1. Tool turret device for machine tools, comprising a turret head bearing device (12'), a turret head (18) having a plurality of tool stations (20) being attached to said bearing device for rotation about an indexing axis (34'), a turret head indexing device (36', 58') for rotating the turret head (18) out of one indexing position, in which one of its tool stations (20) is in an operating position, into a different indexing position, in which a different tool station (20) is in an operating position, as well as locking means (74b', 48') for holding the turret head (18) in its indexing positions and for the rotary release of the turret head during indexing, with said turret head indexing device (36', 58') having an indexing disk (36') similar to a Maltese cross and a driver (58'), said indexing disk being rotatable about the indexing axis (34') together with the turret head and non-rotatably connected to the turret head and having for each tool station (20) of the turret head a slot (40') open at the circumference of the indexing disk and provided with two longitudinal flanks (40a'), said driver being drivable for rotation about a drive axis (60') parallel to the indexing axis (34') and bearing eccentrically to the drive axis at least two driver fingers (68', 70') for insertion into an indexing disk slot (40'), for indexing the indexing disk (36') further and for removal from the indexing disk slot, said driver fingers being arranged at equal radial distances from the driver drive axis (60') and at an angle of rotation distance from one another, characterized in that the driver fingers (68', 70') are formed by rollers (74') mounted on the driver (58') so as to be freely rotatable about axes (68a', 70a') parallel to the driver drive axis (60'), and each driver finger has a locking roller segment (74b') with a first outer diameter as well as an indexing roller segment (74a') with a second, smaller outer diameter, the latter being smaller than the transverse distance of the two longitudinal flanks (40a') of the indexing disk slots (40') from one another, and that a curve (42b') convex towards a longitudinal centre line (42') of the relevant slot (40') is associated with each longitudinal flank (40a') of each of the indexing disk slots (40'), said indexing roller segments (74a') being insertable into the indexing disk slots (40') and said locking roller segments (74b') being adapted to rest against the convex curves (42b), which in relation to the longitudinal flanks (40a') of the indexing disk slots are set back and offset in the direction of the indexing axis (34'), and with said slots (40'), said curves (42b') and said driver fingers (68', 70') being designed and arranged in such a manner that, proceeding from a rest position of the driver (58'), in which one of the turret head tool stations (20) is in an operating position and the locking roller segments (74b') of two driver fingers (68', 70') rest free of clearance against the two adjacent curves (42b') of two adjacent indexing disk slots (40'), the indexing roller segment (74a') of a first one of these two driver fingers (68', 70') is insertable into a first one of these two indexing disk slots (40') due to rotation of the driver (58') and the turret head (18) is thereby rotatable into its next indexing position, with this indexing roller segment (74a') resting only against that longitudinal flank (40a') of this first slot (40') which leads in the direction of movement of said segment, and that also in this next indexing position the locking roller segment (74b') of the first driver finger (68' or 70') as well as the locking roller segment (74b') of another driver finger (70' or 68') rest free of clearance against one of the two aforementioned curves (42b') and against the curve (42b') of the nest indexing disk slot (40') adjacent this curve.

2. Device as defined in claim 1, characterized in that each of the indexing disk slots (40') widens towards the outside in the region of its open end.

3. Device as defined in claim 1 or 2, characterized in that the curves (42b') are designed such that the driver fingers (68', 70') are out of contact with the curves (42b') during the rotation of the turret head (18).

4. Device as defined in any or several of the preceding claims, characterized in that the curves (42b') are of a circular arc-shaped design and of such a length and arranged such that, proceeding from one of the rest positions of the driver (58'), the two driver fingers (68', 70') move along these two curves (42b') and so as to rest against them over a first angle of rotation region (C) of the driver (58') without turning the indexing disk (36'), the turret head (18) is turned into its next indexing position by the first driver finger (68' or 70') engaging in the first indexing disk slot (40') over a second angle of rotation region (D) of the driver (58') following said first angle of rotation region (C), and the first and another driver finger (68', 70') move along one of these two curves (42b') as well as a curve (42b') of the next indexing disk slot (40') adjacent to said one curve and so as to rest against these curves over a third angle of rotation region (C) of the driver (58') following said second angle of rotation region (D) without turning the indexing disk (36') so that the turret head (18) is secured against rotation by the curves (42b') and the driver fingers (68', 70') in the first and the third angle of rotation regions (C).

5. Device as defined in claims 3 and 4, characterized in that the curves (42b') are of such a length that at the transition from the first to the second angle of rotation regions (C and D, respectively) the driver finger (68' or 70') moving out of one of the two indexing disk slots (40') clears the curve (42b') adjacent to the driver finger.

6. Device as defined in any or several of the preceding claims, characterized in that the driver (58') has only two driver fingers (68', 70').

7. Device as defined in claim 6, characterized in that the angle of rotation distance of the driver fingers (68', 70') from one another is 180°.

8. Device as defined in claims 4 and 7, characterized in that the sum of the three angle of rotation regions (C/2, D, C/2) is 180°.

9. Device as defined in any or several of claims 4 - 8, characterized in that the first and the third angle of rotation regions (C) are of the same size.

10. Device as defined in claims 8 and 9, characterized in that the second angle of rotation region (D) is at least 90° and less than 160°.

11. Device as defined in claim 10, characterized in that the second angle of rotation region (D) is approximately 135°.

12. Device as defined in claim 10, characterized in that the second angle of rotation region (D) is approximately 120°.

13. Device as defined in any or several of the preceding claims, characterized in that in the rest position of the driver (58') the driver drive axis (60') extends between two adjacent slots (40') and the two facing curves (42b') of these two slots are symmetrical to the driver drive axis (60').

14. Device as defined in any or several of the preceding claims, characterized in that the slots (40') are designed to be oriented radially in relation to the indexing axis (34') and each symmetrical to a central plane (42') containing the indexing axis (34').

15. Device as defined in any or several of the preceding claims, characterized in that the facing curves (42b') of two adjacent indexing disk slots (40') are formed by a disk-shaped member (48') common to both curves, the circumference of said member having the shape of at least part of a circle.

16. Device as defined in claim 15, characterized in that the circumference of the member (48') is of a circular arc-shaped design at least in two oppositely located regions.

17. Device as defined in any or several of the preceding claims, characterized by a driver drive motor (62) designed as an electrical geared motor or as a hydromotor.

18. Device as defined in claim 17, characterized in that a switching device (66) controlled by the angle of rotation is associated with the driver drive motor (62).

19. Device as defined in any or several of the preceding claims, characterized in that the longitudinal flanks (40a') of the indexing disk slots (40') extend parallel to tangents to the inner ends of the curves (42b').

20. Device as defined in any or several of the preceding claims, characterized in that one of the parts (18, 38') rotatable about the indexing axis (34') is adapted to be pressed by a pressure medium piston (82) against a stationary part (12) of the turret head bearing device (10).

21. Device as defined in claim 20, characterized in that the rotatable part is the turret head (18).

22. Device as defined in claim 20 or 21, characterized in that the pressure medium piston (82) is acted upon with pressure medium only on one side - in the sense of pressing the rotatable part (18) against the stationary part (12) - and at least one seal (88, 90) associated with the pressure medium piston (82) forms a return spring for the pressure medium piston operative during pressure release.

23. Device as defined in any or several of claims 20 to 22, characterized by a cam (78) non-rotatably coupled with the driver (58') for controlling a pressure medium valve (80) in a pressure medium line (86, 92, 94) leading to the pressure medium piston (82).

24. Device as defined in claims 4 and 23, characterized in that the cam (78) is designed such that the pressure medium valve (80) is reversible in beginning and end sections of the first and third angle of rotation regions (C), respectively, in order to thus block the rotatable part (18) over the remaining sections (A) of the first and third angle of rotation regions (C).

## Revendications

1. Système à tourniquet porte-outil pour machine-outil, comprenant un dispositif de support pour tête de tourniquet (12'), sur lequel est montée une tête de tourniquet (18) présentant plusieurs stations à outils (20) avec faculté de rotation autour d'un axe de commutation (34'), comprenant un dispositif de commutation pour tête de tourniquet (36', 58') afin de faire tourner la tête de tourniquet (18) depuis une position de commutation, dans laquelle l'une de ses stations à outils (20) se trouve dans une position de travail, jusque dans une autre position de commutation, dans laquelle une autre station à outil (20) se trouve dans la position de travail, et comprenant des organes de verrouillage (74b', 48') pour tenir la tête de tourniquet (18) dans ses positions de commutation, et pour libérer la rotation de la tête de tourniquet pendant la suite de la commutation, dans lequel le dispositif de commutation de tête de tourniquet (36', 58') comporte un disque de commutation (36') capable de tourner conjointement avec la tête de tourniquet autour de l'axe de commutation (34'), relié solidairement en rotation à la tête de tourniquet et présentant une forme analogue à une croix de Malte, comportant une fente (40') pour chaque station à outil (20) de la tête de tourniquet, chaque fente étant ouverte à la périphérie du disque de commutation et étant dotée de deux flancs longitudinaux (40a'), et comportant un élément d'entraînement (58'), susceptible d'être entraîné en rotation autour d'un axe d'entraînement (60') parallèle à l'axe de commutation (34'), et portant en position excentrique vis-à-vis de cet axe au moins deux doigts d'entraînement (68', 70') destinés à être introduits dans une fente (40') du disque de commutation afin de déclencher la poursuite de la commutation du disque de commutation (36'), et destinés à être sortis hors de la fente du disque de commutation, lesdits doigts étant agencés à la même distance radiale depuis l'axe d'entraînement (60') des éléments d'entraînement, et agencés à une distance angulaire l'un de l'autre, caractérisé en ce que les doigts d'entraînement (61', 70') sont formés par des galets montés sur l'élément d'entraînement (58') en rotation libre autour d'axes (68a', 70a') parallèles à l'axe d'entraînement (60'), et chaque doigt d'entraînement possède un segment de galet de verrouillage (74b') présentant un premier diamètre extérieur, et un segment de galet de commutation (74a') présentant un deuxième diamètre extérieur plus petit, ce dernier étant plus petit que la distance transversale des deux flancs longitudinaux (40a') des fentes du disque de commutation (40') l'un par rapport à l'autre, et en ce qu'à chaque flanc longitudinal (40a') de chacune des fentes (40') du disque de commutation est associée une courbe (42b') convexe en direction d'une ligne longitudinale médiane (42') de la fente concernée (40'), lesdits segments de galets de commutation (74a') étant susceptibles d'être introduits dans les fentes (40') du disque de commutation, et les segments de galets de verrouillage (74b') étant susceptibles d'être appliqués contre les courbes convexes (42b), lesquelles sont en retrait par rapport aux flancs longitudinaux (40a') des fentes du disque de commutation, et agencées en décalage en direction de l'axe de commutation (34'), et les fentes (40'), les courbes (42b'), et les doigts d'entraînement (68', 70') étant conçus et agencés de telle manière que, partant d'une position de repos de l'élément d'entraînement (58'), dans laquelle l'une des stations à outils (20) de la tête de tourniquet se trouve en position de travail, et les segments de galets de verrouillage (14b') de deux doigts d'entraînement (68', 70') sont appliqués sans jeu conte les deux courbes mutuellement voisines (42b') de deux fentes mutuellement voisines (40') du disque de commutation, par rotation de l'élément d'entraînement (58'), le segment de galet de commutation (74a') d'un premier de ces deux doigts d'entraînement (68', 70') est susceptible d'être introduit dans une première de ces deux fentes (40') du disque de commutation, et la tête de tourniquet (18) est ainsi susceptible d'être tournée jusque dans sa position de commutation suivante, de sorte que ledit segment (74a') du galet de commutation n'est appliqué que contre le flanc longitudinal (40a'), disposé vers l'avant en sens contraire à la direction de déplacement de ce segment, de cette première fente (40'), et en ce que, également dans cette position de commutation suivante, le segment de galet de verrouillage (74b') du premier doigt d'entraînement (68' ; 70'), ainsi que le segment de galet de verrouillage (74b') d'un autre doigt d'entraînement (70' ; 68'), sont appliqués sans jeu contre l'une des deux courbes précitées (42b'), et contre la courbe (42b') voisine de ladite courbe, de la fente suivante (40') du disque de commutation.

2. Système selon la revendication 1, caractérisé en ce que chacune des fentes (40') du disque de commutation va en s'élargissant vers l'extérieur dans la région de son extrémité ouverte.

3. Système selon l'une ou l'autre des revendications 1 et 2, caractérisé en ce que les courbes (42b') sont ainsi conçues que les doigts d'entraînement (68', 70') ne sont pas en contact avec les courbes (42 b') pendant la rotation de la tête de tourniquet (18).

4. Système selon l'une ou plusieurs des revendications précédentes, caractérisé en ce que les courbes (42 b') sont conçues en forme d'arc circulaire, et choisies d'une telle longueur et agencées de telle façon que, partant depuis l'une des positions de repos de l'élément d'entraînement (58'), sur une première plage angulaire (C) de l'élément d'entraînement (58') les deux doigts entraînement (68', 70') se déplacent le long de ces deux courbes (42b') en étant appliqués contre celles-ci et sans faire tourner le disque de commutation (36'), sur une deuxième plage angulaire (D) de l'élément d'entraînement (58') qui fait suite à la première plage angulaire (C) la tête de tourniquet (18) est mise en rotation jusque dans sa position de commutation suivante au moyen du premier doigt d'entraînement (68' ; 70') qui s'engage dans la première fente (40') du disque de commutation, et sur une troisième plage angulaire (C) de l'élément d'entraînement (58') qui fait suite à la deuxième plage angulaire (D) le premier doigt d'entraînement (68', 70') ainsi qu'un autre se déplacent le long de l'une de ces deux courbes (42b') ainsi que le long d'une courbe (42b') voisine de celle dernière de la fente suivante (40') du disque de commutation et sont appliqués contre ces courbes, sans faire tourner le disque de commutation (36'), de sorte que la tête de tourniquet (18) est bloquée à l'encontre d'une rotation dans la première et dans la troisième plage angulaire (C), au moyen des courbes (42b') et des doigts d'entraînement (68', 70').

5. Système selon les revendications 3 et 4, caractérisé en ce que les courbes (42 b') ont des longueurs choisies de telle manière qu'à la transition de la première vers la deuxième plage angulaire (C ; D) le doigt d'entraînement (68'; 70') en déplacement hors des deux fentes du disque de commutation (40') se libère depuis la courbe (42b') qui lui est voisine.

6. Système selon l'une ou plusieurs des revendications précédentes, caractérisé en ce que l'élément d'entraînement (58') ne comporte que deux doigts d'entraînement (68', 70').

7. Système selon la revendication 6, caractérisé en ce que l'écart angulaire des doigts d'entraînement (68', 70') l'un par rapport à l'autre s'élève à 180°.

8. Système selon les revendications 4 et 7, caractérisé en ce que la somme des trois plages angulaires (C/2, D, C/2) s'élève à 180°.

9. Système selon l'une ou plusieurs des revendications 4 à 8, caractérisé en ce que la première et la troisième plage angulaire (C) sont égales.

10. Système selon les revendications 8 et 9, caractérisé en ce que la deuxième plage angulaire (D) est au moins égale à 90° et inférieure à 160°.

11. Système selon la revendication 10, caractérisé en ce que la deuxième plage angulaire (D) s'élève à environ 135°.

12. Système selon la revendication 10, caractérisé en ce que la deuxième plage angulaire (B) s'élève à environ 120°.

13. Système selon l'une ou plusieurs des revendications précédentes, caractérisé en ce que, dans la position de repos de l'élément d'entraînement (58'), l'axe d'entraînement (60') s'étend ente deux fentes mutuellement voisines (40'), et en ce que les deux courbes (42 b'), tournées l'une vers l'autre, de ces deux fentes, sont symétriques par rapport à l'axe d'entraînement (60').

14. Système selon l'une ou plusieurs des revendications précédentes, caractérisé en ce que les fentes (40') sont orientées radialement par rapport à l'axe de commutation (34'), et sont réalisées chacune symétriquement vis-à-vis d'un plan médian (42') qui contient l'axe de commutation (34').

15. Système selon l'une ou plusieurs des revendications précédentes, caractérisé en ce que les courbes (42b') tournées l'une vers l'autre de deux fentes mutuellement voisines (40') du disque de commutation, sont formées par un corps (48') en forme de disque commun aux deux courbes, dont la périphérie présente la forme d'au moins une partie d'un cercle.

16. Système selon la revendication 15, caractérisé en ce que la périphérie du corps (48') est conçue en forme d'arc de cercle, au moins dans deux régions mutuellement opposées.

17. Système selon l'une ou plusieurs des revendications précédentes, caractérisé par un moteur d'entraînement (62), réalisé par un groupe moto-réducteur électrique, ou bien par un moteur hydraulique.

18. Système selon la revendication 17, caractérisée en ce qu'un dispositif de commutation (66) à commande angulaire est associé au moteur d'entraînement (62).

19. Système selon l'une ou plusieurs des revendications précédentes, caractérisé en ce que les flancs longitudinaux (40a') des fentes (40') du disque de commutation s'étendent parallèlement aux tangentes aux extrémités intérieures des courbes (42b').

20. Système selon l'une ou plusieurs des revendications précédentes, caractérisé en ce que l'une des parties (18, 38') en rotation autour de l'axe de commutation (34') est susceptible d'être pressée par un piston (82) à fluide sous pression contre une partie stationnaire (12) du dispositif de support (10) de la tête de tourniquet.

21. Système selon la revendication 20, caractérisé en ce que la partie rotative est la tête de tourniquet (18).

22. Système selon l'une ou l'autre des revendications 20 et 21, caractérisé en ce que le piston (82) à fluide sous pression est susceptible d'être attaqué par un fluide sous pression uniquement d'un seul côté (dans le sens du pressage de la parie rotative (18) contre la partie stationnaire (12)), et en ce qu'au moins un joint (88, 90) associé au piston (82) forme un ressort de rappel pour le piston, agissant lors de la disparition de la pression.

23. Système selon l'une ou plusieurs des revendications 20 à 22, caractérisée par une courbe de commande (78), accouplée solidairement en rotation avec l'élément d'entraînement (58'), afin de commander une vanne à fluide sous pression (80), dans une conduite à fluide sous pression (86, 92, 94), menant au piston (82) à fluide sous pression.

24. Système selon les revendications 4 et 23, caractérisé en ce que la courbe de commande (78) est réalisée de telle manière que la vanne à fluide sous pression (80) est capable d'être commutée dans les tronçons départ et de terminaison de la première et de la troisième plage angulaire (C), afin de bloquer ainsi la partie rotative (18) sur les autres tronçons (A) de la première et de la troisième plage angulaire (C).
